# EUROPEAN PATENT APPLICATION

(11) **EP 2 846 514 A1**
(43) Date of publication of application: **11.03.2015**
(21) Application number: 13183177.8
(22) Date of filing: 05.09.2013
(51) Int. Cl.: H04L 29/08, G06F 9/445

(54) **Method for installing and configuring an application**

(71) Applicant: iMinds VZW, 9050 Gent (BE); Universiteit Gent, 9000 Gent (BE)
(72) Inventor: The designation of the inventor has not yet been filed
(74) Representative: Bird Goën & Co

(57) **Abstract**

A method for configuring an application on a device associated to a user, the method comprising:
- initiating a first internet session by the device with a data storage means;
- generating and storing characterization information for the device by the data storage means, based on information derived from a first internet session initiated by the device, the first internet session being set up between the device and the data storage means;
- generating and storing first identification information for the device by the data storage means;
- determining an appropriate version of the application suitable for use with the device by the data storage means based on the characterization information;
- determining an associated internet address of a server for retrieving by the device the appropriate version of the application, by the data storage means;
- redirecting the first internet session to the associated internet address by the data storage means;
- downloading from the server and installing the application by the device;
- setting up a second internet session initiated by the device, the second internet session being set up between the device and the data storage means, for retrieving configuration information for the user;
- matching by the data storage means of the stored first identification information with a second identification information for the device derived from the second internet session and, if a match occurs, providing the configuration information to the device within the second internet session by the data storage means;
- thereafter, configuring the application based on the configuration information.

## Description

The present invention relates to methods for installing and configuring an application on a device associated to a user.

### BACKGROUND TO THE INVENTION

Installing a new application on device associated to a user, as for instance a smart phone, has become extremely easy. One can simply click on a link (or retrieve the link from a QR code) pointing to the location of the application in an online application store. Automatically, or after providing a password, the application is installed and ready for use.

However, in some cases, it is needed to pass additional configuration information to the freshly installed application, e.g. in cases when:
- A vendor of consumer electronics offers an app that can be used to manage its appliances. The app needs to be configured with the correct appliance information regarding the specific appliance it has to interact with;
- an app can offer a multitude of configuration parameters. A vendor (or other app users) can offer a number of presets, every preset corresponding to a specific value for a plurality of configuration parameters;
- a vendor, (retail) sales partner or app developer can offer one-time advantages to its customers upon installation of the app (e.g. number of free items, unlocking additional functionalities depending on purchased product, etc. ).
- a customer filled in a survey (e.g. on PC, tablet...) before the installation of the app and the application needs to be configured according to the outcome of this survey.
- another app on the same or on another device can be configured with configuration information that is also required by a freshly installed app.

When an application has a multitude of configuration parameters, manual configuration (e.g. following a manual) of all parameters individually can be cumbersome and tedious. People prefer simplicity and want to start using the application immediately. As such, configuration (even in case of a limited set of configuration parameters) should be kept as simple as possible.

Some configuration information may already be determined by the vendor in advance (e.g. one-time advantages, personal information about the customer, etc.), but needs to be passed to a freshly installed application. Vendors want to offer the best customer experience at the lowest cost. Therefore, forcing the users to fill in the information a second time or to go through multiple steps is not a good solution. Also, forcing the end-user to login before configuration information can be obtained is cumbersome and not user-friendly. Creating customized applications is complex and not in line with how current online application stores work.

Often, one has a plurality of devices (e.g. a number of phones and tablets within a family). The installation of a new application on a device may require configuration with configuration information that is already present in a similar application on another device. Passing configuration information from one application to another application is complex or even not possible.

There exists a need for methods for simple and automatic configuration of an application on a device associated to a user.

### SUMMARY OF THE INVENTION

It is an object of the present invention to provide a method for configuring an application on a device associated to a user, which requires a minimal intervention of the user.

This object is met with the methods and means according to the independent claims of the present invention. The dependent claims relate to preferred embodiments.

An aspect of the present invention comprises a method for configuring an application on a device associated to a user, the method comprising:
- initiating a first internet session by the device with a data storage means;
- generating and storing characterization information for the device by the data storage means, based on information derived from a first internet session initiated by the device, the first internet session being set up between the device and the data storage means;
- generating and storing first identification information for the device by the data storage means;
- determining an appropriate version of the application suitable for use with the device by the data storage means based on the characterization information;
- determining an associated internet address of a server for retrieving by the device the appropriate version of the application, by the data storage means;
- redirecting the first internet session to the associated internet address by the data storage means;
- downloading from the server and installing the application by the device;
- setting up a second internet session initiated by the device, the second internet session being set up between the device and the data storage means, for retrieving configuration information for the user;
- matching by the data storage means of the stored first identification information with a second identification information for the device derived from the second internet session and, if a match occurs, providing the configuration information to the device within the second internet session by the data storage means;
- thereafter, configuring the application based on the configuration information.

The device can be a mobile device like a smartphone, a tablet, a laptop or wearable device. It can also be a non-portable device, for example a desktop computer, television set, ... The device typically runs an operating system capable of installing and executing applications.

The characterization information can refers to information that can support the decision about which application from which application store needs to be downloaded based on the download request initiated by the device. This characterization information can include the application-name, the application version, the operating system version of the device, the device type (e.g. iPhone, iPad, etc.), supported (hardware) capabilities of the device (e.g. the presence of a camera), the geographical area where the device is located or other parameters that can help deciding which application is best suited for the device.

Identification information can refer to information that enables the identification of the device, the application or the user, in order to get permission from the data storage means to receive configuration information. Such identification information can include for instance IP address, session timestamp, application name, device type, operating system, unique device id (e.g. serial number, phone number, etc).

Configuration information refers to information to configure and/or personalize an application, and can include information about the user (name, email, nationality, language, data of birth etc.), user preferences (e.g. user settings from an online service, settings from other users, settings from other applications, account information...), value chain information (e.g. information about the online service that generates the QR code, information about distributors/resellers of an appliance that can be controlled by an app, ...), commercial information (vouchers, promo codes, ...), information on how to install a certain product or service, information related to appliances or services the application has to interact with, etc.

The data storage means can be a system that supports the installation of applications on devices and their configuration with a variety of configuration information. The system may operate as a web service. It can be integrated in a web server (e.g. web server from an online shop), can be a dedicated cloud server, can be part of an application store, or any other computing device connected to the internet. It can be a distributed system or link to other storage means that store configuration information that is relevant for the configuration of an application on a device associated to a user.

The application server can be part of an existing application store, can be a dedicated server, or integrated in any other computing device connected to the internet.

According to preferred embodiments of the present invention, the method comprises generating the first identification information by the data storage means; and embedding the first identification information for use as the second identification information into the application by the server, before downloading the application from the server by the device.

According to preferred embodiments of the present invention, retrieving the configuration information is performed by the device by setting up the second internet session between the device and the data storage means during a first launch of the application.

According to preferred embodiments of the present invention, generating the first identification information for the device by the data storage means comprises requesting and receiving the first identification information from the server.

According to preferred embodiments of the present invention, generating the first identification information for the device by the data storage means comprises deriving the first identification information from metadata of the first internet session.

According to preferred embodiments of the present invention, the first identification information and the second identification information comprise respective first timestamp information and second timestamp information, and matching stored first identification information with the second identification information for the device comprises deciding on whether the second timestamp information is within a predetermined time period from the first timestamp information.

According to preferred embodiments of the present invention, the method further comprising providing configuration information to the data storage means by an information providing means, and providing link information to the device by the information providing means to initiate the first internet session by the device.

According to preferred embodiments, providing configuration information to the data storage means may comprise forwarding configuration information with the link information, for forwarding to the data storage means by the device when setting up the first internet session.

According to preferred embodiments, the method further comprises generating the first identification information in the information providing means, and generating the first identification information by the data storage means comprises retrieving the first identification information from the first internet session, the first identification information being forwarded by the information providing means to the device for forwarding to the data storage means by the device when setting up the first internet session.

According to preferred embodiments of the present invention, the method further comprises providing inquiry information to the device by the data storage means and mapping the inquiry information on a user interface of the device, thereby requesting second configuration information from the user, receiving the second configuration information from the device by the data storage means, providing the configuration information and the second configuration information to the device by the data storage means in the second internet session, and configuring the application based on the configuration information and the second configuration information.

According to preferred embodiments of the present invention, the method further comprises storing third configuration information on the data storage means, generating and storing a unique ID for the device by the data storage means, forwarding the unique ID for the device to the device, forwarding the unique ID for the device to the data storage means when setting up the first internet session by the device, providing the third configuration information to the device by the data storage means based on the unique ID, and configuring the application based on the configuration information and the third configuration information.

According to preferred embodiments of the present invention, the data storage means further comprises fourth configuration information associated to a second unique device ID, and the method further comprises retrieving the fourth configuration information from the data storage means by the device, by forwarding the second unique device ID to the data storage means by the device in the second internet session, retrieving the fourth configuration information by the data storage means based on the second unique device ID, and forwarding the fourth configuration information by the data storage means to the device; and configuring the application based on the configuration information and the fourth configuration information.

According to preferred embodiments of the present invention, the device comprises a QR code reader, and initiating the first internet session comprises reading a QR code by the device.

### BRIEF DESCRIPTION OF THE DRAWINGS

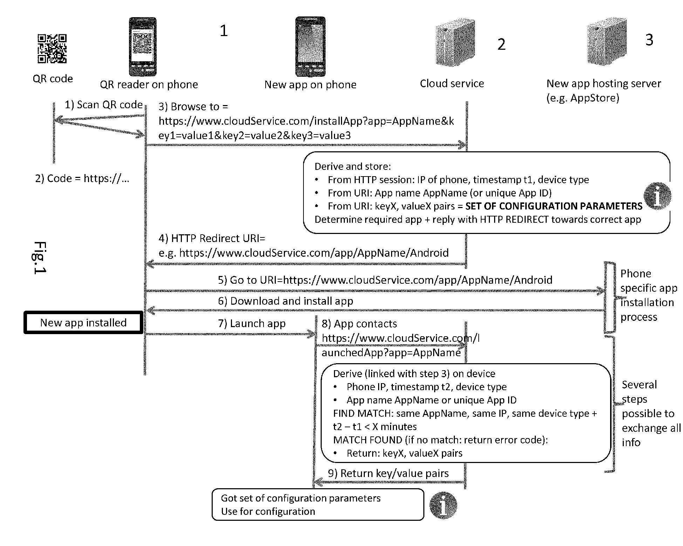

Further features of the present invention will become apparent from the drawings, wherein Figures 1 to 5 illustrate detailed call flows illustrating embodiments of the present invention.

### DETAILED DESCRIPTION OF EMBODIMENTS

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the drawings, like reference numerals indicate like features; and, a reference numeral appearing in more than one figure refers to the same element.

The invention includes a solution to install and configure a new application on a smart phone in a single step. The smart phone does not necessary have a specially adapted application installed, but comprises a means to setup a first internet connection with a data storage means, when such an address is made available to it. For instance, the device preferably comprises a standard QR reader. A QR code can then be read by the device, wherein the IP address of the data storage means.

Alternative solutions for initiating the installation and configuration process are possible, leading to different requirements. For example, NFC tags could be used, requiring a phone with a NFC reader. Other (often proprietary) QR code alternatives could be used (SnapTag codes, Touchcode codes, Infinity View codes, Ezcode, Microsoft tag solutions (tag.microsoft.com), data matrix codes, MaxiCode, based on image recognition); in that case a suitable application in order to be able to scan the code may be required. Still alternatively, `classical' solutions to pass a link could be used (e-mail, browsing to web page, etc.).

Figure 1 illustrates a basic flow according to a preferred embodiment of the present invention. A QR code is generated, e.g. by a vendor, and comprises a link (URI) to a server supporting the installation and configuration and a set of configuration parameters or the name of a configuration profile encoded as URI values. In the figure, this server's URI starts with
https://www.CloudService.com. This QR code can for instance be placed on a device 1, can be generated on any electronic device (possibly based on user input), can be provided on paper or several QR codes (each code representing different settings) can be printed in a manual.

When the user wants to install and configure the new application on his device 1 as for instance smart phone, the following steps can be performed.

The user uses a default QR reader application on the smart phone 1 to scan a QR code. The QR reader can then open a built-in internet browser, or the default browser and follows the URI link to the server or data storage means 2. The data storage means 2 temporarily stores all available information that can be derived from the established session (for instance, from the HTTP session: the IP-address of the device, device type, and timestamp info; preferably minimally a combination of the IP-address of the device, device type and timestamp info, URI values. For instance, URI values from the URI query: application name (or unique application identification information), (key X, value X) pairs. Or for instance, HTTP GET/SET values (for instance, values from an HTTP GET/SET form). Optionally the data storage means can show a welcome page. The latter could contain information represented to the user by means of a user interface as a fill-in form, to collect additional configuration information (second configuration information). Based on the derived characterization information and, optionally, additional information (time, validity of promotion, additional user input, ...) that can also be temporarily stored in the data storage means 2, the data storage means or server 2 selects which application (often called "app") needs to be installed. This is made possible based on the collected characterizing information. The server then redirects the smart phone to the URI for the installation of the application (for instance by means of a HTTP redirect action), the address of the appropriate application hosting server 3. The smart phone is then redirected to this URI and the application is automatically downloaded and installed (optionally a password can be required) from the application server 3. The application is installed and launched by the user for the first time.

When launching the application, the application automatically connects to the data storage means 2 to verify if configuration information is available (Alternatively, this could be triggered by the user, or triggered by the occurrence of a predetermined event). The data storage means 2 retrieves all required information from the request, for instance from the HTTP session: the IP-address of the device, device type, and timestamp info; preferably minimally a combination of the IP-address of the device, device type and timestamp info; and URI values, for instance, application name (or unique application identification information), (key X, value X) pairs, and matches this information against temporarily stored information. Alternatively, some of this information can be transmitted by the application to the data storage means 2 over this session. This matching preferably further comprises a matching of respective time stamp information. If a match is found, the stored values (derived from URI query) and, optionally, additional information (e.g. configuration settings for a device, location info, wizard info, installation steps to show on a second screen, application capabilities e.g. basic versus premium ...) is transferred to the smart phone 1. Optionally, additional information can be exchanged between the application on the smart phone 1 and data storage means 2. This information can be used to further tune the configuration settings. Optionally, some additional info can be requested from the user. The way this information is requested can be adapted based on the initial information in the QR code. Using the configuration information, the application on the device 1 configures itself and goes to the next step (normal operation, additional wizard...).

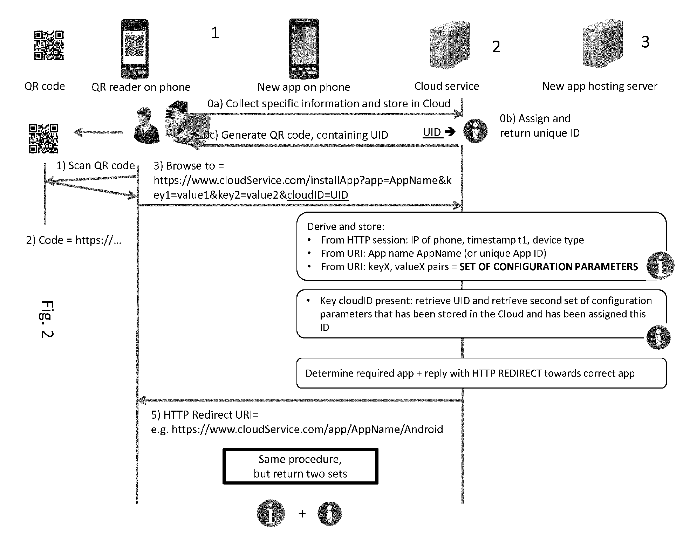

In Figure 2, a further embodiment of the present invention is illustrated. This embodiment is similar to the embodiment discussed in relation with Fig. 1, but differs in that additional (third) configuration information is stored in the data storage means 2, associated to a unique ID for the device 1, which is for instance also generated by the data storage means 2, and forwarded to the device 1. The device also forwards the unique ID for the device 1 to the data storage means 2 when setting up the first internet session. The data storage means 2 provides also the third configuration information to the device by the data storage means based on the unique ID. The application is configured based on the configuration information and the third configuration information.

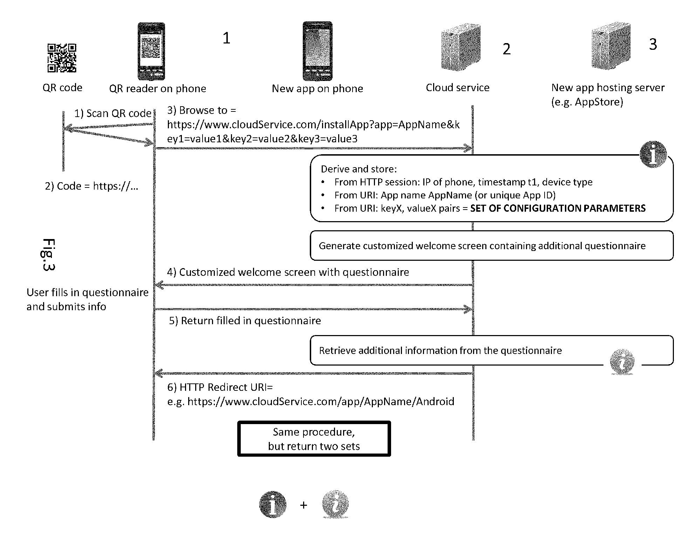

In Figure 3, a still further embodiment of the present invention is illustrated, which is similar to the embodiment described in relation with Figure 1. Hereby a customized welcome screen is provided to the user for retrieving additional configuration information from the device/user. The method further comprises providing inquiry information to the device by the data storage means and mapping the inquiry information on a user interface of the device 1. Hereby second configuration information can be requested from the device/user. The second configuration information is received from said device by said data storage means. The configuration information and the second configuration information is provided to the device 1 by the data storage means 2 in the second internet session, and the application is configured based on the configuration information and the second configuration information.

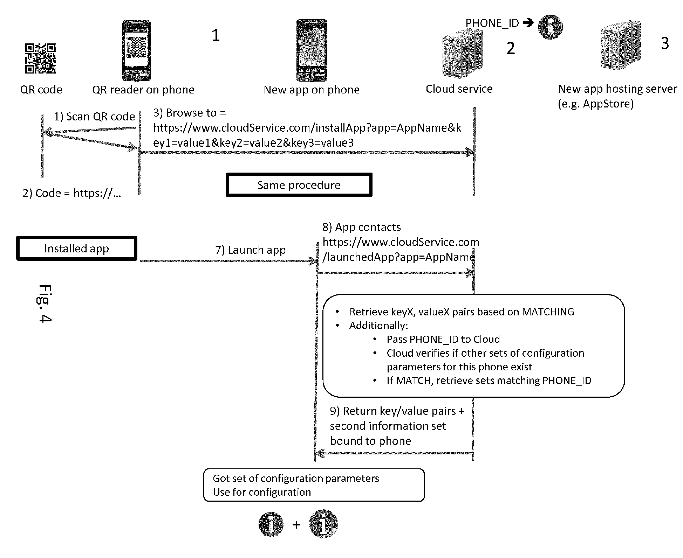

Figure 4 illustrates a further embodiment of the present invention, comprising retrieval of additional (fourth) configuration information from the data storage means 2 based on a second unique device identifier, associated to the fourth configuration information. Fourth configuration information from the data storage means is retrieved by the device by forwarding the second unique device ID to the data storage means by the device in the second internet session, upon which the fourth configuration information is retrieved by said data storage means based on said second unique device ID, and forwarded by said data storage means to said device. The application is configured based on said configuration information and said fourth configuration information. The second unique device ID is an ID that is uniquely linked to the device (e.g. phone number, serial number,...). As such, this unique device ID cannot be generated (the ID is fixed and does not change) and, since the ID is linked to and stored in the device, it does not need to be forwarded to the device to be communicated to the data storage means over the first internet session. Consequently, this unique device ID can be retrieved by the installed application and transmitted over the second internet session.

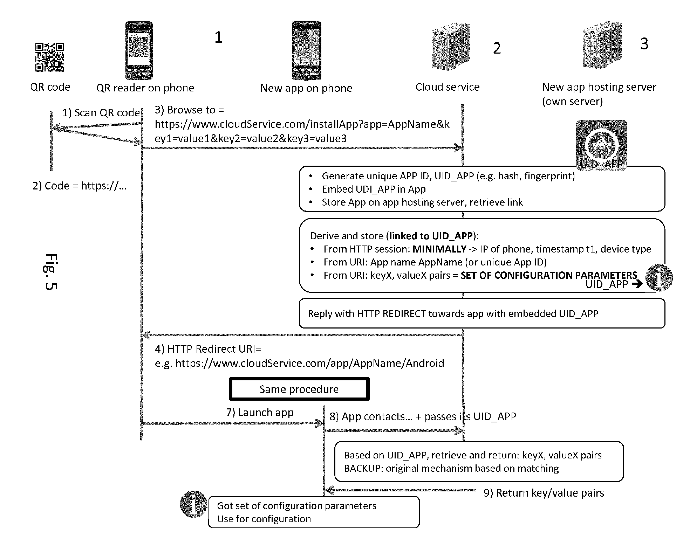

In Figure 5, a further embodiment of the present invention is illustrated, whereby matching is based on a first identification information embedded in the application, for instance convenient when the application server is owned by the same party as the data storage means 2. The first identification information is generated by the data storage means 2 and the first identification information is embedded by the application server 3 into the application for use as said second identification information, before downloading the application from the server by the device.

It is to be understood that the invention is not limited to the particular features of the means and/or the process steps of the methods described as such means and methods may vary. It is also to be understood that the terminology used herein is for purposes of describing particular embodiments only, and is not intended to be limiting. It must be noted that, as used in the specification and the appended claims, the singular forms "a" "an" and "the" include singular and/or plural referents unless the context clearly dictates otherwise. It is also to be understood that plural forms include singular and/or plural referents unless the context clearly dictates otherwise. It is moreover to be understood that, in case parameter ranges are given which are delimited by numeric values, the ranges are deemed to include these limitation values.

The particular combinations of elements and features in the above detailed embodiments are exemplary only. As those skilled in the art will recognize, variations, modifications, and other implementations of what is described herein can occur to those of ordinary skill in the art without departing from the spirit and the scope of the invention as claimed. Accordingly, the foregoing description is by way of example only and is not intended as limiting. The invention's scope is defined in the following claims and the equivalents thereto. Furthermore, reference signs used in the description and claims do not limit the scope of the invention as claimed.

## Claims

1. A method for configuring an application on a device associated to a user, the method comprising:
- initiating a first internet session by said device with a data storage means;
- generating and storing characterization information for said device by said data storage means, based on information derived from a first internet session initiated by said device, said first internet session being set up between said device and said data storage means;
- generating and storing first identification information for said device by said data storage means;
- determining an appropriate version of said application suitable for use with said device by said data storage means based on said characterization information;
- determining an associated internet address of a server for retrieving by said device said appropriate version of said application, by said data storage means;
- redirecting said first internet session to said associated internet address by said data storage means;
- downloading from said server and installing said application by said device;
- setting up a second internet session initiated by said device, said second internet session being set up between said device and said data storage means, for retrieving configuration information for said user;
- matching by said data storage means of said stored first identification information with a second identification information for said device derived from said second internet session and, if a match occurs, providing said configuration information to said device within said second internet session by said data storage means;
- thereafter, configuring said application based on said configuration information.

2. Method according to claim 1, comprising generating said first identification information by said data storage means; and embedding said first identification information for use as said second identification information into said application by said server, before downloading said application from said server by said device.

3. A method according to claim 1 or 2, wherein retrieving said configuration information is performed by said device by setting up said second internet session between said device and said data storage means during a first launch of said application.

4. A method according to any of the previous claims, wherein generating said first identification information for said device by said data storage means comprises requesting and receiving said first identification information from said server.

5. A method according to any of the previous claims 1 to 3, wherein generating said first identification information for said device by said data storage means comprises deriving said first identification information from metadata of the first internet session.

6. A method according to any of the previous claims, wherein said first identification information and said second identification information comprise respective first timestamp information and second timestamp information, and wherein matching stored first identification information with said second identification information for said device comprises deciding on whether said second timestamp information is within a predetermined time period from said first timestamp information.

7. A method according to any of the previous claims, further comprising providing configuration information to said data storage means by an information providing means, and providing link information to said device by said information providing means to initiate said first internet session by said device.

8. A method according to claim 7, wherein providing configuration information to said data storage means comprises forwarding configuration information with said link information, for forwarding to said data storage means by said device when setting up said first internet session.

9. A method according to any of the previous claims, further comprising providing inquiry information to said device by said data storage means and mapping said inquiry information on a user interface of said device, thereby requesting second configuration information from said user, receiving said second configuration information from said device by said data storage means, providing said configuration information and said second configuration information to said device by said data storage means in said second internet session, and configuring said application based on said configuration information and said second configuration information.

10. A method according to any of the previous claims, further comprising storing third configuration information on said data storage means, generating and storing a unique ID for said device by said data storage means, forwarding said unique ID for said device to said device, forwarding said unique ID for said device to said data storage means when setting up said first internet session by said device, providing said third configuration information to said device by said data storage means based on said unique ID, and configuring said application based on said configuration information and said third configuration information.

11. A method according to any of the previous claims, wherein said data storage means further comprises fourth configuration information associated to a second unique device ID, further comprising retrieving said fourth configuration information from said data storage means by said device, by forwarding said second unique device ID to said data storage means by said device in said second internet session, retrieving said fourth configuration information by said data storage means based on said second unique device ID, and forwarding said fourth configuration information by said data storage means to said device; and configuring said application based on said configuration information and said fourth configuration information.

12. A method according to any of the previous claims, wherein said device comprises a QR code reader, and wherein initiating said first internet session comprises reading a QR code by said device.
